# EUROPEAN PATENT SPECIFICATION

(11) **EP 1 707 457 B1**
(45) Date of publication and mention of the grant of the patent: **06.01.2010**
(21) Application number: 06006303.9
(22) Date of filing: 27.03.2006
(51) Int. Cl.: B60R 25/02

(54) **Electric steering locker, and method of controlling electric steering locker**
Elektrisches Lenkschloss und Verfahren zu dessen Steuerung
Verrou électrique de direction et son procédé de contrôle

(30) Priority: 29.03.2005 JP 2005095209
(43) Date of publication of application: 04.10.2006
(73) Proprietor: ALPHA CORPORATION, Yokohama-shi, Kanagawa-ken (JP)
(72) Inventor: Yabumoto, Kazuhisa, Yokohama-shi Kanagawa-ken (JP)
(74) Representative: Grünecker, Kinkeldey, Stockmair & Schwanhäusser Anwaltssozietät

(56) References cited:
- DE-C1- 19 809 295
- JP-A- 2005 001 497

## Description

### BACKGROUND OF THE INVENTION

### 1. FIELD OF THE INVENTION

The present invention relates to an electric steering locker for locking rotation of a steering shaft of a vehicle, and relates to a method of controlling the electric steering locker.

### 2. DESCRIPTION OF THE RELATED ART

Japanese Patent Unexamined Publication (JP2005001497) discloses a steering lock device 1 having a plurality of switches including a lock switch 41 and an unlock switch 42.

### SUMMARY OF THE INVENTION

The above conventional steering lock device 1 is, however, high in cost using the two switches including the lock switch 41 for sensing a locking position of a lock bar 30 and the unlock switch 42 for sensing an unlocking position of the lock bar 30.

It is therefore an object of the present invention to provide an electric steering locker and a method of controlling the electric steering locker, where the number of limit switch(es) for sensing a locking position and an unlocking position is reduced, thus lowering cost.

According to a first aspect of the present invention, there is provided an electric steering locker, comprising: 1) a lock member configured to move by means of a drive source between: i) a locking position for preventing a rotation of a steering shaft, and ii) an unlocking position for allowing the rotation of the steering shaft; 2) a position sensor configured to sense that: i) the lock member moves from the locking position to the unlocking position, and ii) the lock member moves from the unlocking position to the locking position, the position sensor, including: a) a plurality of pressers configured to move in combination with the lock member, and b) a single switch having a contact point which is turned on and off by the pressers; and 3) a controller configured to sense the locking position and the unlocking position of the lock member based on the number of ons-offs of the single switch.

According to a second aspect of the present invention, there is provided a method of controlling an electric steering locker, comprising: 1) moving a lock member by means of a drive source between: i) a locking position for preventing a rotation of a steering shaft, and ii) an unlocking position for allowing the rotation of the steering shaft; 2) sensing a position of the lock member to sense that: i) the lock member moves from the locking position to the unlocking position, and ii) the lock member moves from the unlocking position to the locking position, the sensing, including: a) pressing a contact member of a single switch, and b) turning on and off the contact point of the single switch by the pressing; and 3) sensing the locking position and the unlocking position of the lock member based on the number of ons-offs of the single switch.

According to a third aspect of the present invention, there is provided an electric steering locker, comprising: 1) locking means for moving by means of a drive source between: i) a locking position for preventing a rotation of a steering shaft, and ii) an unlocking position for allowing the rotation of the steering shaft; 2) sensing means for sensing that: i) the locking means moves from the locking position to the unlocking position, and ii) the locking means moves from the unlocking position to the locking position, the sensing means, including: a) a plurality of pressing means for moving in combination with the locking means, and b) single switching means having a contact point which is turned on and off by the plurality of the pressing means; and 3) controlling means for sensing the locking position and the unlocking position of the locking means based on the number of ons-offs of the single switching means.

The other object(s) and feature(s) of the present invention will become understood from the following description with reference to the accompanying drawings.

### BRIEF DESCRIPTION OF THE DRAWINGS

Fig. 1 shows a structural element of an electric steering locker in a locking state, according to an embodiment of the present invention.

Fig. 2 shows the structural element of the electric steering locker, according to the embodiment of the present invention.

Fig. 3 shows a block diagram of an essential circuit of the electric steering locker, according to the embodiment of the present invention.

Fig. 4 shows a flow chart in a locking operation and an unlocking operation, according to the embodiment of the present invention.

Fig. 5 shows an output waveform of a limit switch relative to movement of the lock member, according to the embodiment of the present invention.

### DESCRIPTION OF THE PREFERRED EMBODIMENTS

Hereinafter described based on the drawings is an electric steering locker 1, according to the embodiment of the present invention.

For ease of understanding, the following description will contain various directional terms, such as left, right, upper, lower, forward, rearward and the like.
However, such terms are to be understood with respect to only a drawing or drawings on which the corresponding part of element is illustrated.

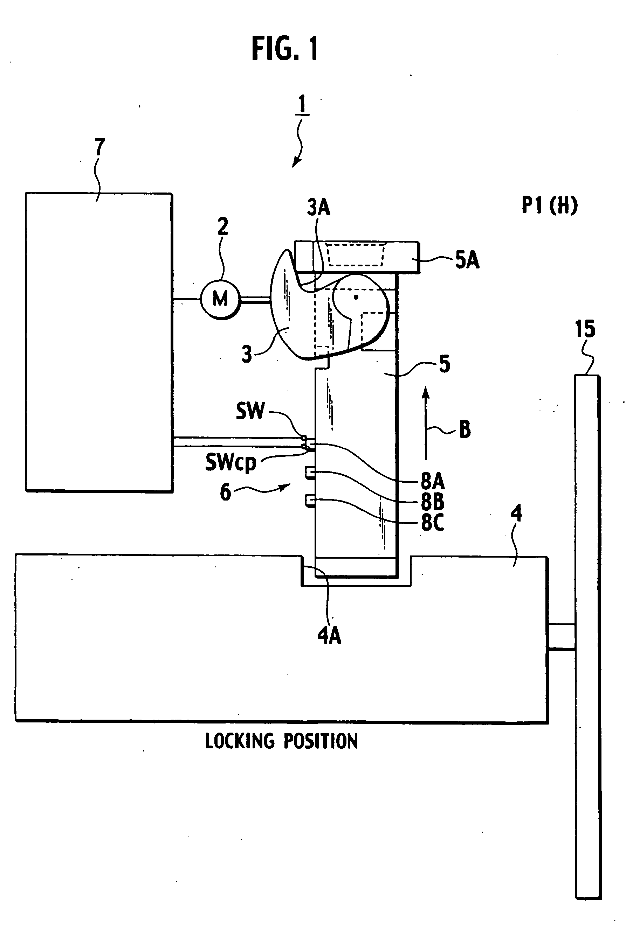

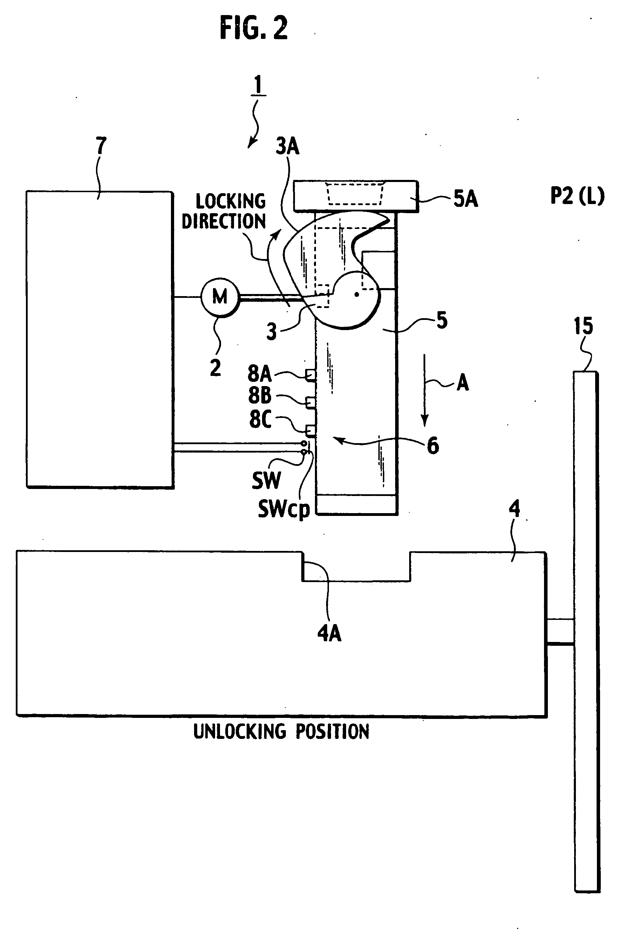

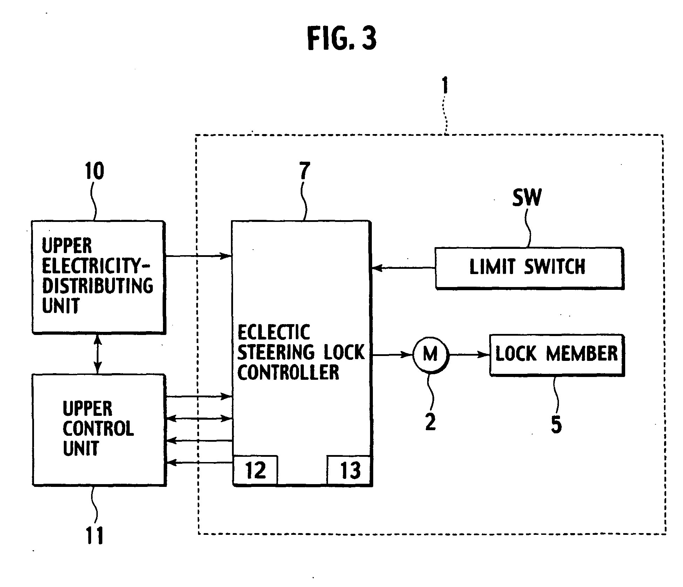

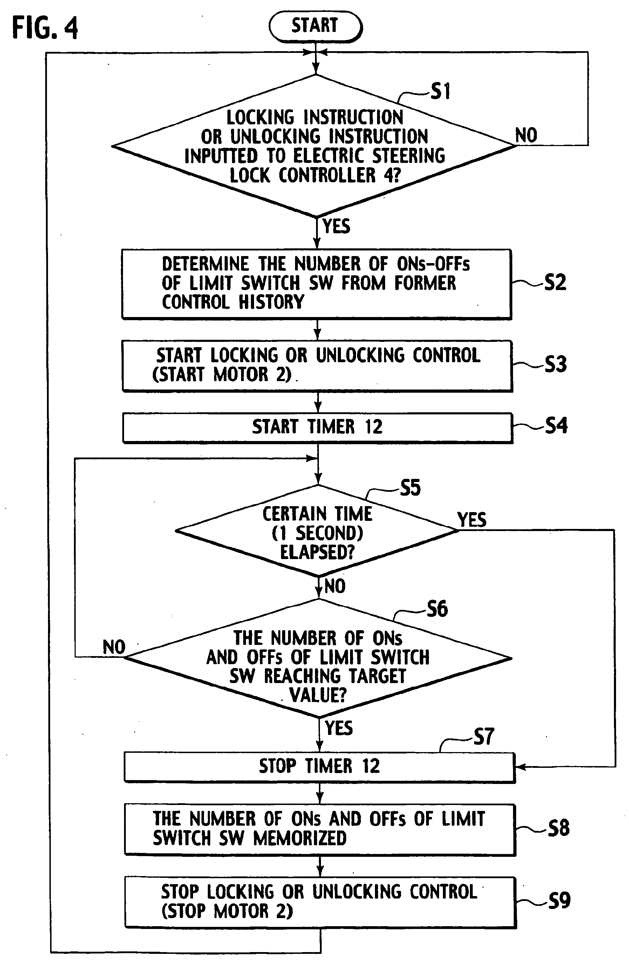

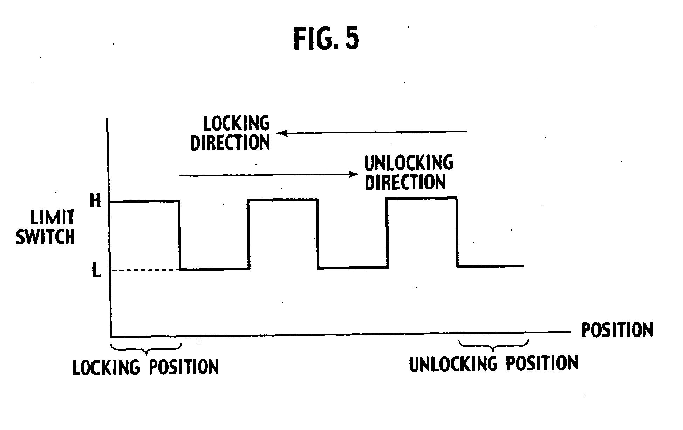

Fig. 1 to Fig. 5 show the embodiment of the present invention, in which Fig. 1 shows structural elements of the electric steering locker 1 in an locking state, Fig. 2 shows the structural elements of the electric steering locker 1 in an unlocking state, Fig. 3 shows a block diagram of essential circuit of the electric steering locker 1, Fig. 4 shows a flowchart in a locking operation and an unlocking operation, and Fig. 5 shows an output waveform of a limit switch SW relative to moving position of a lock member 5.

<Structure of electric steering locker 1>

As shown in Fig. 1 and Fig. 2, the electric steering locker 1 is provided with 1) a motor 2 as a drive source, 2) a cam member 3 turned by dint of a drive force of the motor 2, 3) a lock member 5 which has a hanger part 5A following a cam face 3A of the cam member 3 and which moves between i) a locking position P1 (locking state) stopping rotation of a steering shaft 4 and ii) an unlocking position P2 (unlocking state) allowing the rotation of the steering shaft 4, 4) a position sensor 6 for sensing positions (the locking position P1 and the unlocking position P2) of the lock member 5, and 5) an electric steering lock controller 7 for controlling driving operation of the motor 2 based on information sensed by the position sensor 6.

The position sensor 6 includes: i) a first contact point presser 8A, a second contact presser 8B and a third contact point presser 8C which are disposed substantially equidistantly in a direction of moving the lock member 5 and disposed on a first side of the lock member 5, and ii) a single limit switch SW having a contact point SWcp which is adapted to be sequentially pressed on the first contact point presser 8A, the second contact presser 8B and the third contact point presser 8C in the process of the lock member 5 being moved. As shown in Fig. 1, the limit switch SW is so set that the contact point SWcp thereof is pressed by the first contact point presser 8A in the locking position P1 of the lock member 5. In this case, the limit switch SW outputs a signal "H" in the locking position P1. Moreover, as shown in Fig. 2, the limit switch SW is so set that the contact point SWcp thereof is not pressed below the contact point presser 8C in the unlocking position P2 of the lock member 5. In this case, the limit switch SW outputs a signal "L" in the unlocking position P2. In addition, with the lock member 5 moving between the locking position P 1 and the unlocking position P2 of the lock member 5, the limit switch SW outputs an on-off output waveform (see Fig. 5) to the electric steering lock controller 7.

As shown in Fig. 3, the electric steering lock controller 7 receives a power supply from an upper distributing unit 10, and receives a lock-unlocking instruction from the upper control unit 11. The electric steering lock controller 7 has a counter 13 and a timer 12 each fitted internally (as shown in Fig. 3) or externally to the electric steering lock controller 7. In addition, when a driver and the like presses a steering locking-unlocking button (not shown) for locking or unlocking the electric steering locker 1 to thereby select a locking operation or an unlocking operation, the electric steering lock controller 7 implements a flow shown in Fig. 4.

<Operation of electric steering locker 1>

Hereinafter described based on the flow chart in Fig. 4 are operations of the electric steering locker 1.

### [From unlocking position P2 in Fig. 2]

(Step S1) When a vehicle is parked with the lock member 5 in the unlocking state in Fig. 2, pressing the steering locking-unlocking button (not shown) allows the upper control unit 11 to input a locking instruction to the electric steering lock controller 7. In other words, a routine determines whether or not a locking instruction is inputted to the electric steering lock controller 7.
(Step S2) When Yes at step S1, the electric steering lock controller 7 determines the number of ons-offs of the limit switch SW based on a former count history (ordinarily, three ons and three offs including an initial state - see Fig. 5).

The reason is to be described in detail afterward why the number of ons-offs of the limit switch SW is determined based on the former count history.

(Step S3) Then, the electric steering lock controller 7 outputs a drive signal to the motor 2, to thereby start a locking control.
(Step S4) Then, the timer 12 in the electric steering lock controller 7 is started.
   A driving force of the motor 2 moves the lock member 5 from the unlocking position P2 to the locking position P1 (in a direction A in Fig. 2). In the process of the lock member 5 moving in the direction A in Fig. 2, the contact point SWcp of the limit switch SW is caused to be pressed sequentially by the third contact point presser 8C, the second contact presser 8B and the first contact point presser 8A. The electric steering lock controller 7 counts the number of ons-offs of the limit switch SW.
(Step S5) The routine determines whether or not a certain time (for example, 1 second) has elapsed.
(Step S6) When No at step S5, the routine determines whether or not the number of ons-offs of the limit switch SW reaches a target value.
(Step S7) When Yes at step S6, the routine stops the timer 12.
(Step S8) Then, the number of ons-offs of the limit switch SW is memorized.
(Step S9) Then, the electric steering lock controller 7 immediately stops driving the motor 2.

With this, the rotation of the steering shaft 4 is locked, thereby preventing robbery of the vehicle during its parking.

(Step S7) When Yes at step S5, the routine stops the timer 12 regardless of the number of ons-offs of the limit switch SW.
(Step S8) Then, the number of ons-offs of the limit switch SW is memorized.
(Step S9) Then, the electric steering lock controller 7 immediately stops driving the motor 2.

[From locking position P1 in Fig. 1]

(Step S1) In addition, with the lock member 5 in the locking state in Fig. 1, pressing the steering locking-unlocking button (not shown) so as to start driving the vehicle allows the upper control unit 11 to input an unlocking instruction to the electric steering lock controller 7. In other words, the routine determines whether or not an unlocking instruction is inputted to the electric steering lock controller 7.
(Step S2) When Yes at step S1, the electric steering lock controller 7 determines the number of ons-offs of the limit switch SW based on the former count history (ordinarily, three ons and three offs including the initial state - see Fig. 5).

(Step S3) Then, the electric steering lock controller 7 outputs the drive signal to the motor 2, to thereby start an unlocking control.
(Step S4) Then, the timer 12 in the electric steering lock controller 7 is started. The driving force of the motor 2 moves the lock member 5 from the locking position P1 to the unlocking position P2 (in a direction B in Fig. 1).
   In the process of the lock member 5 moving in the direction B in Fig. 1, the contact point SWcp of the limit switch SW is released from the first contact point presser 8A, and then is sequentially pressed by the second contact presser 8B and the third contact point presser 8C. The electric steering lock controller 7 counts the number of ons-offs of the limit switch SW.
(Step S5) The routine determines whether or not the certain time (for example, 1 second) has elapsed.
(Step S6) When No at step S5, the routine determines whether or not the number of ons-offs of the limit switch SW reaches the target value.
(Step S7) When Yes at step S6, the routine stops the timer 12.
(Step S8) Then, the number of ons-offs of the limit switch SW is memorized.
(Step S9) Then, the electric steering lock controller 7 immediately stops driving the motor 2.

With this, the rotation of the steering shaft 4 is set free.

As described above, even when the number of ons-offs of the limit switch SW fails to reach the target value after an elapse of the certain time (step S5), the routine stops the timer 12 (step S7) and memorizes the number of ons-offs of the limit switch SW (step S8). Then, the electric steering lock controller 7 immediately stops driving the motor 2 (step S9).

As described above, according to the embodiment of the present invention, the position sensor 6 includes: i) the first contact point presser 8A, the second contact point presser 8B and the third contact point presser 8C which move in combination with the lock member 5, and ii) the single limit switch SW having the contact point SWcp which is turned on and off by the first contact point presser 8A, the second contact presser 8B and the third contact point presser 8C. Based on the number of ons-offs of the limit switch SW, the electric steering lock controller 7 senses respectively the locking position P1 and the unlocking position P2 of the limit switch SW, thereby allowing the single limit switch SW alone to sense the lock member 5 moving to the locking position P1 or to the unlocking position P2. In a nutshell, the limit switch SW can be reduced in number, thus lowering cost.

According to the embodiment of the present invention, the limit switch SW is so set as to have different output states between the locking position P1 and the unlocking position P2. Thereby, in operations other than the locking operation and the unlocking operation, the position of the lock member 5 can be made recognizable from the output of the limit switch SW. The above is convenient in the controlling operation of the lock member 5.

According to the embodiment of the present invention, determining that the output of the limit switch SW fails to move the lock member 5 from the locking position P1 or the unlocking position P2 after the elapse of the certain time (for example, 1 second) from the driving start of the motor 2, the routine stops driving the motor 2. With this, a possible heating and the like attributable to a long-time driving operation of the motor 2 can be prevented which heating may be caused when the lock member 5 is not properly moved for some reasons.

The above is specifically described as below:
Trying to lock the steering shaft 4 with a steering wheel 15 turned to a certain extent from an original position may keep the lock member 5 abutting on a side face of steering shaft 4, since a lock hole 4A of the steering shaft 4 is not in a position engageable with the lock member 5. Thereby, if the motor 2 is so rendered as not stop driving even after the elapse of the certain time, the motor 2 will continue driving until the lock hole 4A of the steering shaft 4 engages with the lock member 5 (in other words, until the steering wheel 15 returns to the original position).

According to the embodiment, the electric steering lock controller 7 counts the number of ons-offs of the limit switch SW in the locking operation or the unlocking operation of the lock member 5, to thereby determine, based on the former count history, the number of ons-offs of the limit switch SW necessary for the locking operation or the unlocking operation. With this, when the lock member 5 fails to move properly in a former operation for some reasons, the motor 2 can properly drive according to the former moving state of the lock member 5, thus preventing the possible heating and the like attributable to the long-time driving operation of the motor 2. Hereinabove, the former count history, in case having an unordinary value, is to be reset after the next locking operation or unlocking operation is ended. Thereafter, the ordinary number of ons-offs (three ons and three offs including the initial state) is to be set, thereby preventing continued driving at the unordinary value.

In addition, when the lock member 5 abuts on the side face of the steering shaft 4 as exemplified above, turning the steering wheel 15 to the original position by the next unlocking operation, as the case may be, inserts the lock member 5 into the lock hole 4A by means of a biasing member (not shown) such as coil spring and the like. Therefore, in case the lock member 5 fails to move properly, the routine continues sensing the number of ons-offs of the limit switch SW, which is to be reflected by the next locking operation or unlocking operation.

Although the present invention has been described above by reference to a certain embodiment, the present invention is not limited to the embodiment described above. Modifications and variations of the embodiment(s) described above will occur to those skilled in the art, in light of the above teachings.

Specifically, according to the embodiment of the present invention, there are provided three contact point pressers including the first contact point presser 8A, the second contact point presser 8B and the third contact point presser 8C. The above number is however, not limited to three, for example two or four is allowed. The larger number is, however, more advantageous for more detailed position information of the lock member 5. In addition, when the lock member 5 fails to move properly, the larger number is more advantageous since the routine can determine whether or not the lock member 5 is abutting on the side face of the steering shaft 4 or whether or not some other cause hooks the lock member 5.

This application is based on a prior Japanese Patent Application No. P2005-095209 (filed on March 29, 2005 in Japan). The entire contents of the Japanese Patent Application No. P2005-095209 from which priority is claimed are incorporated herein by reference, in order to take some protection against translation errors or omitted portions.

The scope of the present invention is defined with reference to the following claims.

## Claims

1. An electric steering locker (1), comprising:
1) a lock member (5) configured to move by means of a drive source (2) between:
i) a locking position (P1) for preventing a rotation of a steering shaft (4), and
ii) an unlocking position (P2) for allowing the rotation of the steering shaft (4);
2) a position sensor (6) configured to sense that:
i) the lock member (5) moves from the locking position (P1) to the unlocking position (P2), and
ii) the lock member (5) moves from the unlocking position (P2) to the locking position (P1), **characterised by**
the position sensor (6), including:
a) a plurality of pressers (8A, 8B, 8C) configured to move in combination with the lock member (5), and
b) a single switch (SW) having a contact point (SWcp) which is turned on and off by the pressers (8A, 8B, 8C); and
3) a controller (7) configured to sense the locking position (P1) and the unlocking position (P2) of the lock member (5) based on the number of ons-offs of the single switch (SW).

2. The electric steering locker (1) as claimed in claim 1, wherein
the single switch (SW) is so set as to output differently between the locking position (P1) and the unlocking position (P2).

3. The electric steering locker (1) as claimed in any of claim 1 and claim 2, wherein
when the controller (7) determines that the lock member (5) fails to move to any one of the locking position (P1) and the unlocking position (P2), the drive source (2) stops driving the lock member (5) after an elapse of a certain time from a start of the driving of the lock member (5).

4. The electric steering locker (1) as claimed in any of claim 1 to claim 3, wherein
the controller (7) counts the number of ons-offs of the single switch (SW) in one of a locking operation and an unlocking operation of the lock member (5), to thereby determine, based on a former count history, the number of ons-offs of the single switch (SW) in the one of the respective locking operation and unlocking operation.

5. The electric steering locker (1) as claimed in claim 1, wherein
the position sensor (6) includes the pressers (8A, 8B, 8C) two or more in number.

6. The electric steering locker (1) as claimed in claim 5, wherein
the position sensor (6) includes the pressers (8A, 8B, 8C) three or more in number.

7. The electric steering locker (1) as claimed in claim 1, wherein
the pressers (8A, 8B, 8C) are disposed substantially equidistantly in a direction of moving the lock member (5) and disposed on a first side of the lock member (5).

8. The electric steering locker (1) as claimed in claim 3, wherein
the certain time is 1 second.

9. The electric steering locker (1) as claimed in claim 1, further comprising a cam member (3) turned by dint of a drive force of the drive source (2), wherein
the lock member (5) has a hanger part (5A) configured to follow a cam face (3A) of the cam member (3).

10. A method of controlling an electric steering locker (1), comprising:
1) moving a lock member (5) by means of a drive source (2) between:
i) a locking position (P1) for preventing a rotation of a steering shaft (4), and
ii) an unlocking position (P2) for allowing the rotation of the steering shaft (4);
2) sensing (6) a position of the lock member (5) to sense that:
i) the lock member (5) moves from the locking position (P1) to the unlocking position (P2), and
ii) the lock member (5) moves from the unlocking position (P2) to the locking position (P1), **characterised by**
the sensing (6), including:
a) pressing (8A, 8B, 8C) a contact member (SWcp) of a single switch (SW), and
b) turning on and off the contact point (SWcp) of the single switch (SW) by the pressing (8A, 8B, 8C); and
3) sensing the locking position (P1) and the unlocking position (P2) of the lock member (5) based on the number of ons-offs of the single switch (SW).

11. An electric steering locker (1), comprising:
1) locking means (5) for moving by means of a drive source (2) between:
i) a locking position (P1) for preventing a rotation of a steering shaft (4), and
ii) an unlocking position (P2) for allowing the rotation of the steering shaft (4);
2) sensing means (6) for sensing that:
i) the locking means (5) moves from the locking position (P1) to the unlocking position (P2), and
ii) the locking means (5) moves from the unlocking position (P2) to the locking position (P1), **characterised by**
the sensing means (6), including:
a) a plurality of pressing means (8A, 8B, 8C) for moving in combination with the locking means (5), and
b) single switching means (SW) having a contact point (SWcp) which is turned on and off by the plurality of the pressing means (8A, 8B, 8C); and
3) controlling means (7) for sensing the locking position (P1) and the unlocking position (P2) of the locking means (5) based on the number of ons-offs of the single switching means (SW).

## Patentansprüche

1. Elektrische Lenkarretiervorrichtung (1), die umfasst:
1. ein Arretierelement (5), das so eingerichtet ist, dass es sich mittels einer Antriebsquelle (2) bewegt zwischen:
I. einer Arretierposition (P1) zum Verhindern einer Drehung einer Lenkwelle (4), und
II. einer Entarretierposition (P2) zum Zulassen der Drehung der Lenkwelle (4);
2. einen Positionssensor (6), der so eingerichtet ist, dass er erfasst, dass:
I. sich das Arretierelement (5) von der Arretierposition (P1) an die Entarretierposition (P2) bewegt, und
II. sich das Arretierelement (5) von der Entarretierposition (P2) an die Arretierposition (P1) bewegt, **dadurch gekennzeichnet, dass**
der Positionssensor (6) enthält:
a) eine Vielzahl von Presseinrichtungen (8A, 8B, 8C), die so konfiguriert sind, dass sie sich zusammen mit dem Arretierelement (5) bewegen, und
b) einen einzelnen Schalter (SW) mit einem Kontaktpunkt (SWcp), der durch die Presselemente (8A, 8B, 8C) an- und abgeschaltet wird; und
3. eine Steuereinrichtung (7), die so eingerichtet ist, dass sie die Arretierposition (P1) und die Entarretierposition (P2) des Arretierelementes (5) auf Basis der Anzahl von An-Aus-Schaltvorgängen des einzelnen Schalters (SW) erfasst.

2. Elektrische Lenkarretiervorrichtung (1) nach Anspruch 1, wobei:
der einzelne Schalter /SW) so eingestellt ist, dass sich sein Ausgang zwischen der Arretierposition (P1) und der Entarretierposition (P2) unterscheidet.

3. Elektrische Lenkarretiervorrichtung (1) nach einem der Ansprüche 1 und 2, wobei:
wenn die Steuereinrichtung (7) feststellt, dass sich das Arretierelement (5) weder an die Arretierposition (P1) noch an die Entarretierposition (P2) bewegt, die Antriebsquelle (2) Antrieb des Arretierelementes (5) nach Ablauf einer bestimmten Zeit vom Beginn des Antriebs des Arretierelementes (5) an unterbricht.

4. Elektrische Lenkarretiervorrichtung (1) nach einem der Ansprüche 1 bis 3, wobei:
die Steuereinheit (7) die Anzahl von An-Aus-Schaltvorgängen des einzelnen Schalters (SW) in einem Arretiervorgang und einem Entarretiervorgang des Arretierelementes (5) zählt, um so auf Basis eines früheren Zählwertverlaufs die Anzahl von An-Aus-Schaltvorgängen des einzelnen Schalters (SW) in dem jeweils einen Arretiervorgang und Entarretiervorgang zu bestimmen.

5. Elektrische Lenkarretiervorrichtung (1) nach Anspruch 1, wobei:
der Positionssensor (6) zwei oder mehr der Presseinrichtungen (8A, 8B, 8C) enthält.

6. Elektrische Lenkarretiervorrichtung (1) nach Anspruch 5, wobei:
der Positionssensor (6) drei oder mehr der Presseinrichtungen (8A, 8B, 8C) enthält.

7. Elektrische Lenkarretiervorrichtung (1) nach Anspruch 1, wobei:
die Presseinrichtungen (8A, 8B, 8C) im Wesentlichen in gleichem Abstand in einer Bewegungsrichtung des Arretierelementes (5) angeordnet sind und an einer ersten Seite des Arretierelementes (5) angeordnet sind.

8. Elektrische Lenkarretiervorrichtung (1) nach Anspruch 3, wobei die bestimmte Zeit 1 Sekunde beträgt.

9. Elektrische Lenkarretiervorrichtung (1) nach Anspruch 1, die des Weiteren ein Kurvenelement (3) umfasst, das mittels einer Antriebskraft der Antriebsquelle (2) gedreht wird, wobei:
das Arretierelement (5) einen Eingriffsteil (5A) aufweist, der so eingerichtet ist, dass er einer Kurvenfläche (3A) des Kurvenelementes (3) folgt.

10. Verfahren zum Steuern einer elektrischen Lenkarretiervorrichtung (1), das umfasst:
1. Bewegen eines Arretierelementes (5) mittels einer Antriebsquelle (2) zwischen:
I. einer Arretierposition (P1) zum Verhindern einer Drehung einer Lenkwelle (4), und
I. einer Entarretierposition (P2) zum Zulassen der Drehung der Lenkwelle (4);
2. Erfassen (6) einer Position des Arretierelementes (5), um zu erfassen, dass:
I. sich das Arretierelement (5) von der Arretierposition (P1) an die Entarretierposition (P2) bewegt, und
II. sich das Arretierelement (5) von der Entarretierposition (P2) an die Arretierposition (P1) bewegt, **dadurch gekennzeichnet, dass**
der Erfassen (6) einschließt:
a) Pressen (8A, 8B, 8C) eines Kontaktelementes (SWcp) eines einzelnen Schalters (SW), und
b) An- und Abschalten des Kontaktpunktes (SWcp) des einzelnen Schalters (SW) durch das Pressen (8A, 8B, 8C): und
3. Erfassen der Arretierposition (P1) und der Entarretierposition (P2) des Arretierelementes (5) auf Basis der Anzahl von An-Aus-Schaltvorgängen des einzelnen Schalters (SW).

11. Elektrische Lenkarretiervorrichtung (1), die umfasst:
1. eine Arretiereinrichtung (5) zum Bewegen mittels einer Antriebsquelle (2) zwischen:
I. einer Arretierposition (P1) zum Verhindern einer Drehung einer Lenkwelle (4), und
II. einer Entarretierposition (P2) zum Zulassen der Drehung der Lenkwelle (4);
2. eine Erfassungseinrichtung (6), mit der erfasst wird, dass:
I. sich die Arretiereinrichtung (5) von der Arretierposition (P1) an die Entarretierposition (P2) bewegt, und
II. sich die Arretiereinrichtung (5) von der Entarretierposition (P2) an die Arretierposition (P1) bewegt, **dadurch gekennzeichnet, dass**
die Erfassungseinrichtung (6) enthält:
a) eine Vielzahl von Presseinrichtungen (8A, 8B, 8C), die sich zusammen mit der Arretiereinrichtung (5) bewegen, und
b) eine einzelne Schalteinrichtung (SW) mit einem Kontaktpunkt (SWcp), der durch die Vielzahl der Presseinrichtungen (8A, 8B, 8C) an- und abgeschaltet wird; und
3. eine Steuereinrichtung (7) zum Erfassen der Arretierposition (P1) und der Entarretierposition (P2) der Arretiereinrichtung (5) auf Basis der Anzahl von An-Aus-Schaltvorgängen der einzelnen Schalteinrichtung (SW).

## Revendications

1. Verrou électrique de direction (1), comprenant :
1) un élément de verrouillage (5) configuré pour se déplacer au moyen d'une source d'entraînement (2) entre :
i) une position de verrouillage (P1) pour empêcher une rotation d'un arbre de direction (4), et
ii) une position de déverrouillage (P2) pour permettre la rotation de l'arbre de direction (4) ;
2) un capteur de position (6) configuré pour détecter que :
i) l'élément de verrouillage (5) se déplace de la position de verrouillage (P1) à la position de déverrouillage (P2), et
ii) l'élément de verrouillage (5) se déplace de la position de déverrouillage (P2) à la position de verrouillage (P1), **caractérisé par**
le capteur de position (6), comprenant :
a) une pluralité de presseurs (8A, 8B, 8C) configurés pour se déplacer en combinaison avec l'élément de verrouillage (5), et
b) un commutateur unique (SW) ayant un point de contact (SWcp) qui est activé et désactivé par les presseurs (8A, 8B, 8C) ; et
3) un contrôleur (7) configuré pour détecter la position de verrouillage (P1) et la position de déverrouillage (P2) de l'élément de verrouillage (5) sur la base du nombre d'activations et de désactivations du commutateur unique (SW).

2. Verrou électrique de direction (1) selon la revendication 1, dans lequel
le commutateur unique (SW) est réglé de manière à délivrer différemment entre la position de verrouillage (P1) et la position de déverrouillage (P2).

3. Verrou électrique de direction (1) selon l'une quelconque des revendications 1 et 2, dans lequel
lorsque le contrôleur (7) détermine que l'élément de verrouillage (5) ne parvient pas à se déplacer à l'une quelconque de la position de verrouillage (P1) et de la position de déverrouillage (P2), la source d'entraînement (2) cesse d'entraîner l'élément de verrouillage (5) après l'écoulement d'un certain temps à partir d'un début de l'entraînement de l'élément de verrouillage (5).

4. Verrou électrique de direction (1) selon l'une quelconque des revendications 1 à 3, dans lequel
le contrôleur (7) compte le nombre d'activations et de désactivations du commutateur unique (SW) dans l'une parmi une opération de verrouillage et une opération de déverrouillage de l'élément de verrouillage (5), pour déterminer de ce fait, sur la base d'un historique de comptes antérieurs, le nombre d'activations et de désactivations du commutateur unique (SW) dans respectivement l'opération de verrouillage ou l'opération de déverrouillage.

5. Verrou électrique de direction (1) selon la revendication 1, dans lequel
le capteur de position (6) comprend deux presseurs (8A, 8B, 8C) ou plus.

6. Verrou électrique de direction (1) selon la revendication 5, dans lequel
le capteur de position (6) comprend trois presseurs (8A, 8B, 8C) ou plus.

7. Verrou électrique de direction (1) selon la revendication 1, dans lequel
les presseurs (8A, 8B, 8C) sont disposés de manière sensiblement équidistante dans une direction de déplacement de l'élément de verrouillage (5) et disposés sur un premier côté de l'élément de verrouillage (5).

8. Verrou électrique de direction (1) selon la revendication 3, dans lequel
le certain temps est une seconde.

9. Verrou électrique de direction (1) selon la revendication 1, comprenant en outre un élément de came (3) tourné par une force d'entraînement de la source d'entraînement (2), dans lequel
l'élément de verrouillage (5) a une partie de suspension (5A) configurée pour suivre une face de came (3A) de l'élément de came (3).

10. Procédé de commande d'un verrou électrique de direction (1), comprenant les étapes consistant à :
1) déplacer un élément de verrouillage (5) au moyen d'une source d'entraînement (2) entre :
i) une position de verrouillage (P1) pour empêcher une rotation d'un arbre de direction (4), et
ii) une position de déverrouillage (P2) pour permettre la rotation de l'arbre de direction (4) ;
2) détecter (6) une position de l'élément de verrouillage (5) pour détecter que :
i) l'élément de verrouillage (5) se déplace de la position de verrouillage (P1) à la position de déverrouillage (P2), et
ii) l'élément de verrouillage (5) se déplace de la position de déverrouillage (P2) à la position de verrouillage (P1), **caractérisé par**
la détection (6), comprenant :
a) la pression (8A, 8B, 8C) d'un élément de contact (SWcp) d'un commutateur unique (SW), et
b) l'activation et la désactivation du point de contact (SWcp) du commutateur unique (SW) par la pression (8A, 8B, 8C) ; et
3) détecter la position de verrouillage (P1) et de la position de déverrouillage (P2) de l'élément de verrouillage (5) sur la base du nombre d'activations et de désactivations du commutateur unique (SW).

11. Verrou électrique de direction (1), comprenant :
1) un moyen de verrouillage (5) pour se déplacer par le biais d'une source d'entraînement (2) entre :
i) une position de verrouillage (P1) pour empêcher une rotation d'un arbre de direction (4), et
ii) une position de déverrouillage (P2) pour permettre la rotation de l'arbre de direction (4) ;
2) un moyen de détection (6) pour détecter que :
i) le moyen de verrouillage (5) se déplace de la position de verrouillage (P1) à la position de déverrouillage (P2), et
ii) le moyen de verrouillage (5) se déplace de la position de déverrouillage (P2) à la position de verrouillage (P1), **caractérisé par**
le moyen de détection (6), comprenant :
a) une pluralité de moyens de pression (8A, 8B, 8C) configurés pour se déplacer en combinaison avec le moyen de verrouillage (5), et
b) un moyen de communication unique (SW) ayant un point de contact (SWcp) qui est activé et désactivé par la pluralité de moyens de pression (8A, 8B, 8C) ; et
3) un moyen de contrôle (7) pour détecter la position de verrouillage (P1) et la position de déverrouillage (P2) du moyen de verrouillage (5) sur la base du nombre d'activations et de désactivations du moyen de commutation unique (SW).
